Europäisches Patentamt

European Patent Office

Office européen des brevets

(11) Publication number: **0 260 046**
**A2**

## EUROPEAN PATENT APPLICATION

(21) Application number: 87307692.1

(51) Int. Cl.4: **B60T 17/18**

(22) Date of filing: 01.09.87

(30) Priority: 09.09.86 GB 8621652

(43) Date of publication of application:
16.03.88 Bulletin 88/11

(84) Designated Contracting States:
DE FR GB IT

(71) Applicant: LUCAS INDUSTRIES public limited
company
Great King Street
Birmingham, B19 2XF West Midlands(GB)

(72) Inventor: Farr, Glyn Phillip Reginald
21 The Hamlet
Leek Wootton Warwickshire(GB)

(74) Representative: Spall, Christopher John et al
BARKER, BRETTELL & DUNCAN 138 Hagley
Road
Edgbaston Birmingham B16 9PW(GB)

(54) Improvements in hydraulic braking systems for vehicles.

(57) In a system incorporating a tandem master cylinder (9) operated by a booster (10) each primary and second pressure space (11, 12) is incorporated in separate brake circuits, and an auxiliary master cylinder (13) incorporated in a third circuit independent of the other two is operated by the booster (10). The pressure in the booster (10) may actuate a servo unit (15) which, in turn, controls operation of an auxiliary master cylinder (3). When the rear wheel brakes (3, 4) are applied by the servo unit (15), the unit (15) acts as a brake-pressure apportioning valve. In such a construction the auxiliary master cylinder (13) may incorporate a solenoid-operated valve (64) responsive to signals from wheel speed sensors (60, 61) associated with both rear wheels.

FIG 1

FIG.2

## IMPROVEMENTS IN HYDRAULIC BRAKING SYSTEMS FOR VEHICLES

This invention relates to hydraulic braking systems for vehicles comprising separate primary and secondary brake circuits, each incorporating a respective one of the pressure spaces of a tandem master cylinder and arranged so that should one circuit fail, the other is still available to stop the vehicle.

Examples of braking systems of the kind set forth are front brakes/rear brakes for rear wheel drive cars with a 60/40 braking ratio, and X or diagonal split with each circuit comprising the brakes on one front wheel and on the diagonally opposite rear wheel for front wheel drive cars with a 70/30 braking ratio.

In the half system failed case the front/rear split may retain only 40% of its braking, and the X or diagonal split will have 50%, irrespective of which circuit fails. In both cases the pedal travel is increased substantially, being caused by the secondary piston of the master cylinder being moved to the end of the bore, in the secondary failed case, or being in abutment with the primary piston, in the primary failed case.

According to one aspect of our invention an hydraulic braking system of the kind set forth is provided with a third brake circuit independent of the primary and secondary brake circuits.

Thus, upon failure of one of the circuits, the two other circuits will be available to stop the vehicle.

For a front wheel drive car the split would be 35/35/30 for each front and both rears. In such a case at least 65% of the braking is available should one system fail. In addition pedal travel increase, being associated with only a 35% loss, is greatly reduced.

For a rear wheel drive car the split would be 30/30/40. In such a case at least 60% of the braking is available should one system fail, and the pedal travel increase, at most, will be associated with a 40% loss.

Conveniently the master cylinder is booster-assisted and is arranged to operate only part of the braking system, the remaining part being operated by the power assistance of the booster.

This has the advantage that the pedal travel and the pedal effort are reduced during normal operation of the brakes.

According to another aspect of our invention, in a braking system of the kind set forth incorporating a booster-assisted hydraulic tandem master cylinder, each brake is applied by at least one actuator, and each primary and secondary pressure space is incorporated in a separate brake circuit with at least one respective actuator, the remaining actuators being operated by hydraulic pressure in at least one auxiliary master cylinder in response to pressure generated in the booster.

The pressure generated in the booster may actuate a servo unit which, in turn, controls operation of the auxiliary master cylinder. When the rear wheel brakes are applied by means of such a servo unit, the servo-unit acts as a brake-pressure apportioning valve. In such a construction the auxiliary master cylinder may incorporate a solenoid-operated valve responsive to signals from wheel speed sensors associated with both rear wheels. The incorporation of the solenoid-operated valve adapts the auxiliary master cylinder to act as an anti-lock brake pressure modulator. Also, if the front wheels are provided with anti-lock modulators, such modulators can be powered from a separate power source, such as an electric motor.

In a layout of one system each primary and secondary pressure space of the tandem master cylinder is incorporated in separate primary and secondary brake circuits with a respective front wheel brake, and the brakes on the rear wheels are applied in response to pressure generated in the booster, either individually, by means of separate auxiliary master cylinders, or simultaneously, by means of a common auxiliary master cylinder.

In another layout in which each front wheel brake is operated by two separate first and second wheel cylinders, one pressure space of the tandem master cylinder is connected to the first wheel cylinders, the two second wheel cylinders are operated in response to pressure generated in the booster, either individually, by means of separate auxiliary master cylinders, or simultaneously, by means of a common auxiliary master cylinder, and the other pressure space is connected to the wheel cylinders of the two rear brakes.

Some embodiments of our invention are illustrated in the accompanying drawings in which:

Figure 1 is a layout of triple hydraulic braking system for a vehicle;

Figure 2 is a graph of rear wheel pressure plotted against front wheel pressure;

Figure 3 is a layout of a braking system similar to Figure 1 but showing a modification;

Figure 4 is a layout of another modified braking system;

Figure 5 is a layout of yet another braking system;

Figure 6 is a layout of a braking system similar to Figure 5 but showing a modification;

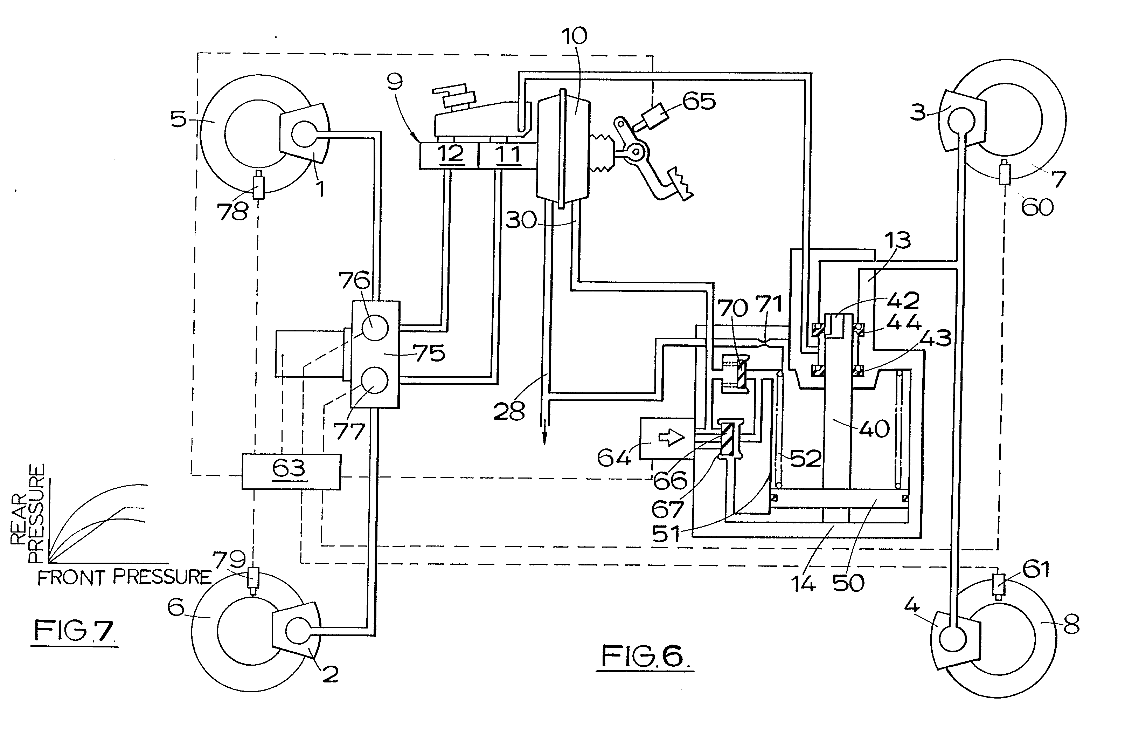

Figure 7 is a graph of rear wheel pressure plotted against front wheel pressure for the braking system of Figure 6;

Figure 8 is a layout of another braking system;

Figure 9 is a layout of a braking system similar to Figure 8 but showing a modification;

Figure 10 is a layout of another braking system; and

Figure 11 is a section through a modified relay valve.

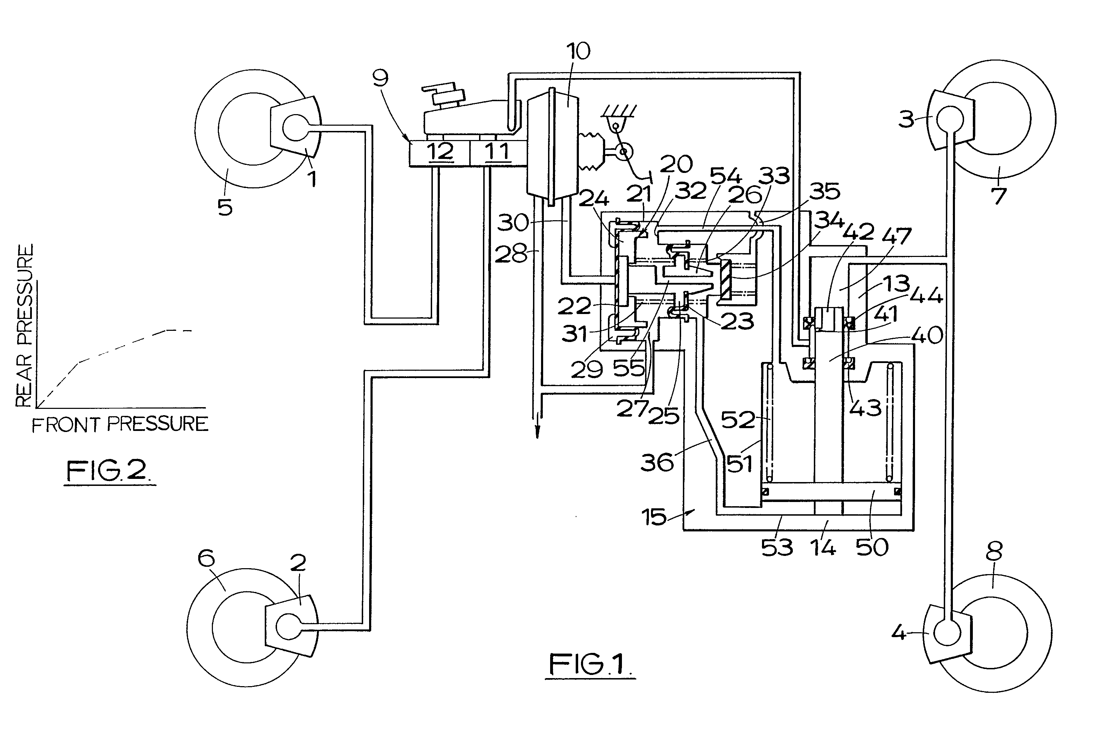

In the braking system illustrated in Figure 1 of the drawings brakes 1, 2, 3, 4 are provided on the front wheels 5, 6 and on the rear wheels 7, 8 of the vehicle, respectively.

An hydraulic tandem master cylinder 9 is operated by a vacuum-suspended pedal-operated booster 10. The brake 2 is incorporated in a primary brake circuit with the primary pressure space 11 of the master cylinder 9 by which it is applied. Similarly the brake 1 is incorporated in a secondary brake circuit with the secondary pressure space 12 by which it is applied. Finally both rear brakes 3 and 4 are applied hydraulically by an hydraulic auxiliary master cylinder 13 incorporated in the housing 14 of a rear vacuum servo-unit 15 with which it forms an assembly.

As illustrated, the rear servo and master cylinder assembly comprises a multiple area piston 20 of stepped outline which is suspended in a bore 21 by axially spaced larger and smaller diaphragms 22 and 23 of elastomeric material. The piston 20 comprises an outer annular portion 24 and a relatively movable central portion 25. The large diaphragm 22 carries the piston portion 24 and acts on the adjacent end of the central portion 25, and the smaller diaphragm 23 carries the central portion 25, at a position from which a nose 26 extends forwardly.

A constant pressure chamber 27 between the diaphragms 22 and 23 is permanently connected to a vacuum connection 28 which is also connected to the constant pressure chamber of the booster 10.

A power chamber 29 on the side of the larger diaphragm 22 remote from the piston 20 is connected to the power chamber of the booster 10 through an external connection 30.

A caged spring 31 acts between the two piston portions 24 and 25 normally to hold the outer portion 24 away from an annular stop face 32 on the housing 14. A compression spring 33 acts on the diaphragm 23 to urge the nose 26 away from a valve member 34 which isolates an air inlet port 35 from an internal passage 36.

The auxiliary master cylinder 13 comprises a piston 40 provided with a radial recuperation port 41 in communicating with an axial passage 42 terminating in the free end of the piston. Normally the port 41 is positioned between axially spaced fixed seals 43 and 44 on opposite sides of a passage 45 which leads to a reservoir 46, also for feeding the pressure spaces 11 and 12 of the master cylinder 9.

A pressure space 47 in front of the piston 40 is connected to the brakes 3 and 4 on both rear wheels 7 and 8.

The piston 40 comprises an axial extension on a piston 50 of greater diameter which works in a bore 51 and is normally urged by a return spring 52 into a retracted position in engagement with a wall 53 at the end of the bore 51 remote from the pressure space 47. The end of the piston 50 remote from the pressure space 47 is connected to the passage 36, and the opposite end is connected to the constant pressure chamber 27 through an internal passage 54.

In the position illustrated in the drawings, both ends of the piston 50 are subjected to vacuum at substantially equal negative pressures by a passage 55 in the inner piston portion 25 which interconnects the passage 36 with the passage 54 through the chamber 27. Thus the spring 52 holds the piston 50 in the retracted position described above.

When the booster 10 is operated by the pedal to actuate the master cylinder 9 and the booster is energised, both brakes 1 and 2 are applied by the supply of pressurised fluid from the two pressure spaces 11 and 12. Simultaneously the air admitted to the power chamber of the booster is admitted to the power chamber 29 of the servo-unit 15. A differential applied to opposite sides of the diaphragm 22 urges the multiple-area piston 20 forwardly with the nose co-operating with the valve member 34 initially to isolate opposite sides of the piston 50 from each other and subsequently to urge the valve member 34 away from its seating so that air is admitted to the passage 36. The differential thus applied to the piston 50 advances the piston 50 in the bore 51 against the force in the spring 52. This carries the piston 40 forwardly with it and the recuperation port 41 passes through the outermost seal 44 to isolate the pressure space 47 from the reservoir 46, whereafter the piston 40 pressurises the fluid in the pressure space 47 to apply both brakes 3 and 4.

The relative areas of the piston portions 24 and 25 are so arranged that at low pressures, the pressure in the master cylinder 9 is substantially equal to that in the rear brakes 3, 4. However, the pressure difference across the piston 50 is greater in proportion to the areas at opposite ends of the multiple area piston 20.

At a predetermined pressure, the annular portion 24 of the multiple area piston 20 overcomes the caged spring force 31 and it moves to abut the stop 32. After this point the area subject to the main servo boost pressure is substantially equal to the pressure behind the piston 50. Therefore initially as shown in Figure 2 the pressure in the front brakes 1, 2 and the rear brakes 3, 4 rises at a substantially equal rate until the said predetermined pressure is reached. Thereafter the pressure in the rear wheel brakes 3, 4 rises at the reduced rate relative to the front brakes 1, 2. This gives a similar characteristic to that obtained with a pressure conscious reducing valve in a line to the rear wheel brakes. In this case, however, the area of the piston 50 to produce the pressure for the rear brakes 3, 4 need only be the reduced rear pressure acting upon the area of the piston 40. This means that the piston 50 can therefore be correspondingly smaller.

For example, if the front brake pressure is to be 90 bar for 40 bar in the rear and a pressure conscious regulating valve (P.C.R.V) is fitted to reduce the pressure applied to the rear brakes, the servo area would correspond to the 90 bar pressure. In this construction the servo area is sized to correspond with the 40 bar pressure required by the rear brakes. Thus the air pressure intensification performs the function of a P.C.R.V. and reduces the size required for the piston 50 acting upon the piston 40. Also when the differential in air pressure is attained, the unit 15 acts as a limiting valve for the rear brakes 3, 4.

Specifically the pressure differential cannot be increased above atmospheric pressure. This could be different if the booster 10 used compressed air/air or hydraulic pressure to provide the differential pressure, and it is to be understood that such modifications are within the scope of the present invention.

In the construction described above we provide a triple braking system with the use of a conventional tandem master cylinder 9, the vacuum-suspended booster 10, and the rear servo unit 15. The normal pedal travel is reduced as the master cylinder 9 only needs to supply the fluid volume for the front brakes 1, 2 and not for the remainder of the system.

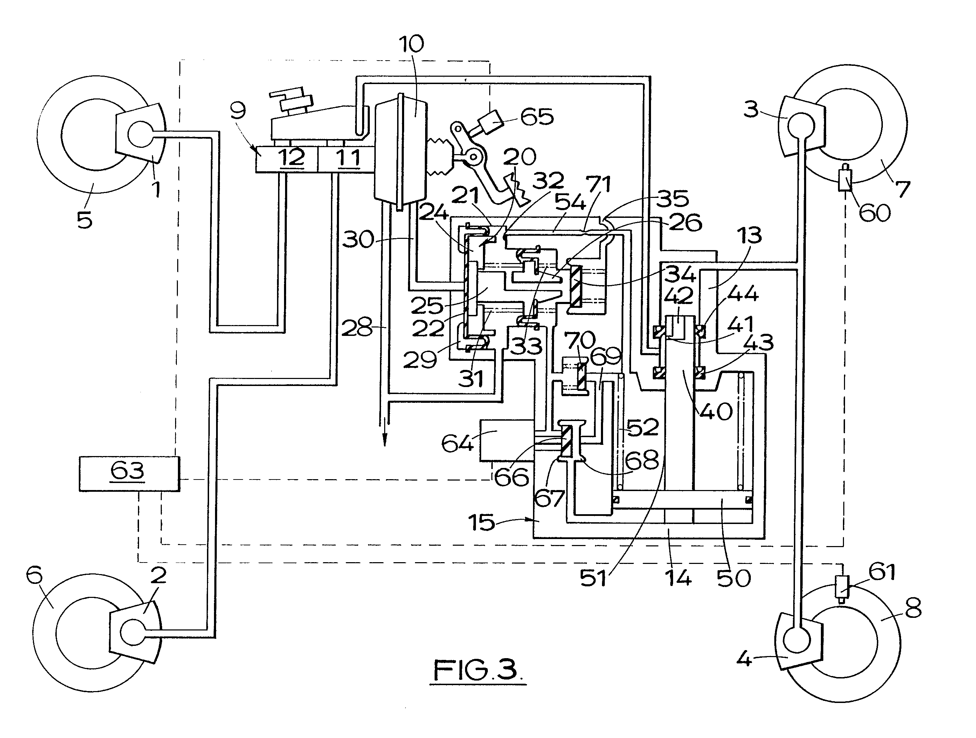

In the system illustrated in Figure 3 of the drawings is similar to that of Figure 1 but has been modified to provide an anti-lock facility for the rear wheel brakes 3 and 4.

As illustrated each rear wheel 7 and 8 is provided with a speed sensor 60, 61 which feed skid signals to an electronic control module 63. The control module 63 controls operation of a solenoid-operated valve 64 in response to a skid signal from either or both sensors 60, 61 and a signal from a switch 65 operated by the pedal of the booster 10.

The solenoid-operated valve 64 is placed in the passage 36 and includes a valve member 66 which is alternatively engageable with a first seating 67 in the passage 36 and a second seating 68 between the passage 36 and a by-passage 69 which interconnects opposite sides of the piston 50 when the valve member 66 is in engagement with the first seating 67.

A one-way valve 70 permits flow from the by-pass passage into the passage 36 on the upstream side of the valve member 66.

A restrictor 71 is provided in the passage 54.

When the pedal is operated to apply the brakes, the switch 65 is actuated by the pedal to send a signal to the control module 63 which, in turn, energises the solenoid of the valve 64 to urge the valve member 66 into engagement with the seating 68. Open communication is therefore provided through the passage 36, and the brakes, including the rear wheel brakes 3, 4, are applied normally as described above with reference to the system of Figure 1.

If a skid signal is sensed at either rear brake 3, 4 by one of the sensors 60, 61 an appropriate signal is sent to the control module 63. This, in turn, de-energises the solenoid of the valve 64 which causes the valve member 66 to move away from the seating 68 and into engagement with the seating 67. This isolates the outer face of the piston 50 from air, and opposite sides of the piston 50 are then exposed to vacuum through the by-pass passage 69. In consequence the piston 50 retracts in its bore 51, to withdraw the piston 40 of the auxiliary master cylinder 13, and thereby relieve the pressure applied to the rear wheel brakes 3 and 4. The rear wheels 7, 8 then spin up, to cancel the skid signal emitted by the sensor, and the control module 63 energises the solenoid again to open the valve and re-establish communication through the passage 36. Air is re-introduced behind the piston 50 and the rear brakes 3, 4 are re-applied. The rate of re-application of the brakes 3, 4 is controlled by the rate of flow through restrictor 71 in the passage 54.

Arranging for the solenoid of the valve 64 to be energised when the brakes are applied with the signal cancelled in an anti-lock situation ensures that the rear brakes 3 and 4 cannot be applied should the control module 63 or another part of the logic control circuit fail. Uncontrollable application of the brakes 3 and 4 might otherwise cause the vehicle, itself, to become uncontrollable, particularly on surfaces of low co-efficients of friction. However, should the brake pressures be arranged so that the fronts always lock first, the solenoid valve would permit normal rear pressurisation and be activated to release rear pressure only when a skid signal is received.

Failure of the logic control circuit which automatically opens the solenoid-operated valve 64 illuminates a warning light in the vehicle.

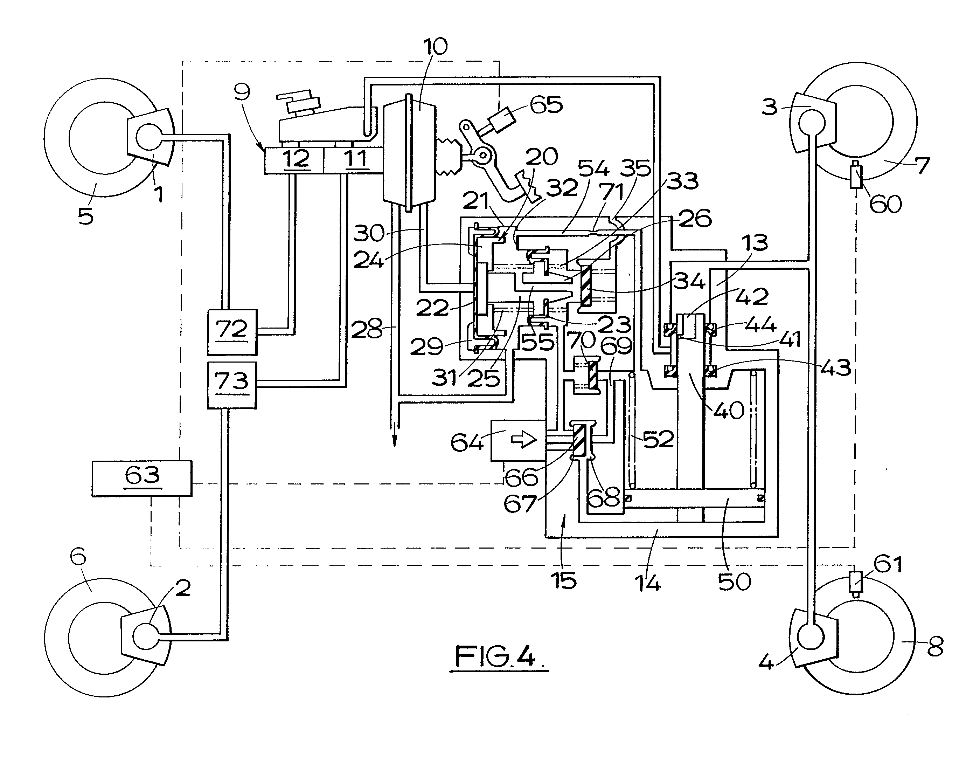

The system illustrated in the layout shown in Figure 4 of the drawings is suitable for front wheel drive motor cars. In this system an anti-lock modulator 72, 73 driven from a respective front wheel, is disposed between each pressure space 12, 11 of the master cylinder 9 and the respective brake 1, 2.

We therefore can provide independent control of each front wheel 5, 6, and both rear wheels 7, 8.

The construction and operation of the system of Figure 4 is otherwise the same as that of Figure 3 and corresponding reference numerals have been applied to corresponding parts.

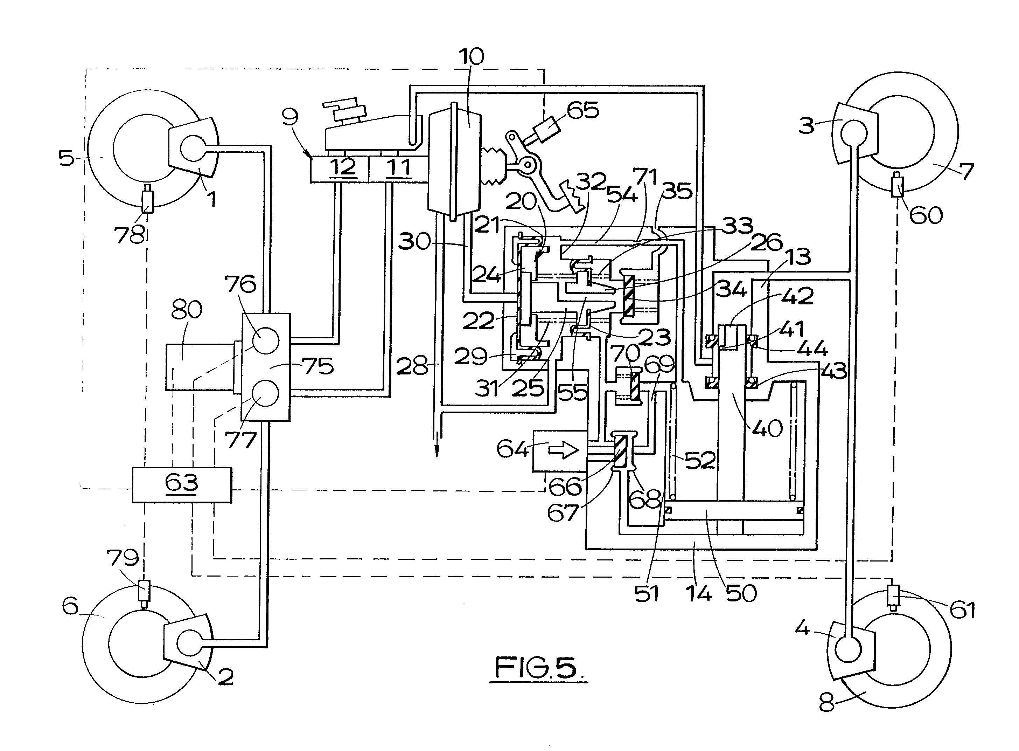

In the system illustrated in Figure 5, which is similar to Figure 3, the rear-servo unit 15 has been integrated into a full electronic anti-lock system.

As illustrated a modulator unit 75 is provided for the front wheels and the unit includes a separate modulator 76, 77 for each respective front wheel 5, 6 each modulator 76, 77 being disposed between each pressure space 12, 11 of the master cylinder 9 and the respective brake 1, 2.

Each front wheel 5, 6 has a wheel speed sensor 78, 79 and the signals from these sensors are fed to the control module 63, 78,and 79.

Each modulator 76, 77 is provided with a solenoid-operated valve adapted to be energised by a current from the control module when a skid signal is emitted by a respective speed sensor 78, 79, and an electrically driven hydraulic pump 80, also controlled by the control module 63, provides the energy to control re-application of a respective front wheel brake after the skid condition has been corrected.

The construction and operation of the system of Figure 5 is otherwise the same as that of Figure 3, and corresponding reference numerals have been applied to corresponding parts.

In the braking system illustrated in Figure 6 of the accompanying drawings the pistons 20, the diaphragms 22 and 23, the springs 31 and 33, and the valve member 34 are omitted. The piston 50 is connected directly to the power chamber of the booster 10 through the passage 30 and the solenoid-operated valve 64.

In this system the servo unit comprises a simplified unit which is used only as an anti-lock device. the relative areas of the pistons 40 and 50 are chosen so that the pressure applied to the rear wheel brakes 3 and 4 rises in proportion, but not necessarily equal, to the pressures applied to the front wheel brakes 1 and 2 until the unladen vehicle is decelerating substantially at about .8g. Above this level the rear/pressure exceeds the ideal, and anti-lock control is introduced with the solenoid-operated valve 64 operating as described above with reference to Figure 5.

If the vehicle is fully laden, the rear pressure will always be below the ideal and the anti-lock control is not introduced unless the vehicle is being braked on a wet or slipping road surface.

The construction and operation of the system of Figure 6 is otherwise the same as that of Figure 5, and corresponding reference numerals have been applied to corresponding parts.

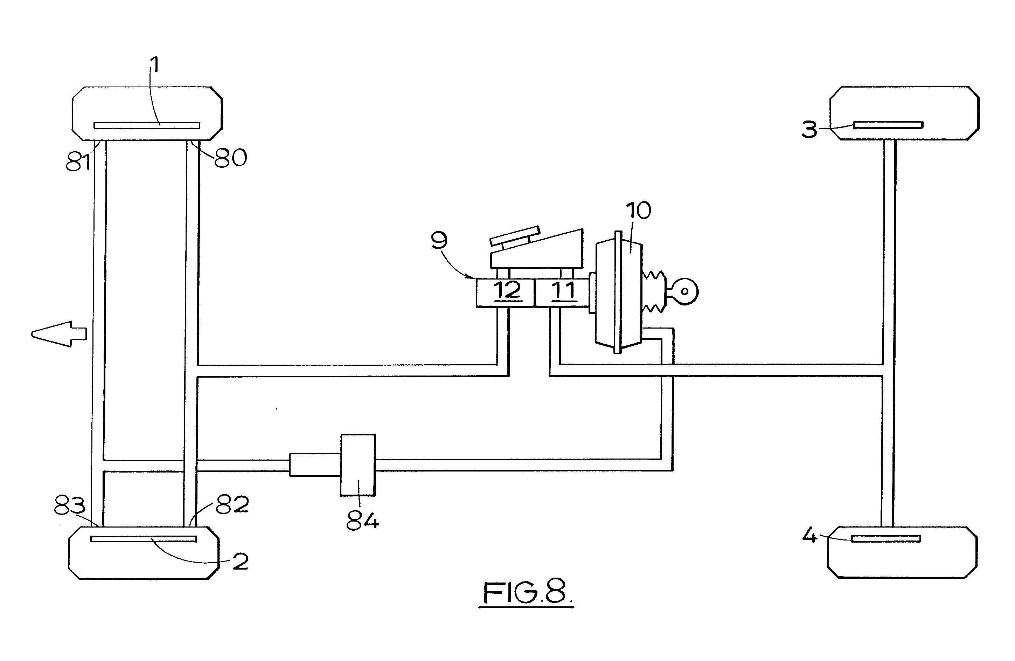

In the braking system shown in the layout of Figure 8, each front wheel brake 1, 2 is operated by first and second hydraulic actuators 80, 81 and 82, 83 respectively, substantially of equal capacities. The pressure space 12 is connected to both actuators 80 and 82, and the pressure space 11 is connected to both rear wheel brakes 3 and 4. The booster 10 operates a servo unit 84 which is similar in construction to the unit incorporated in the system of Figure 6, except that the solenoid-operated valve 64 is omitted.

In this system, the servo unit 84 operates the actuators 81 and 83 of both front wheel brakes. Thus substantially one half of each front brake is operated by the booster 10, with the tandem master cylinder 9 operating the other half fronts, and the two rear brakes 3 and 4.

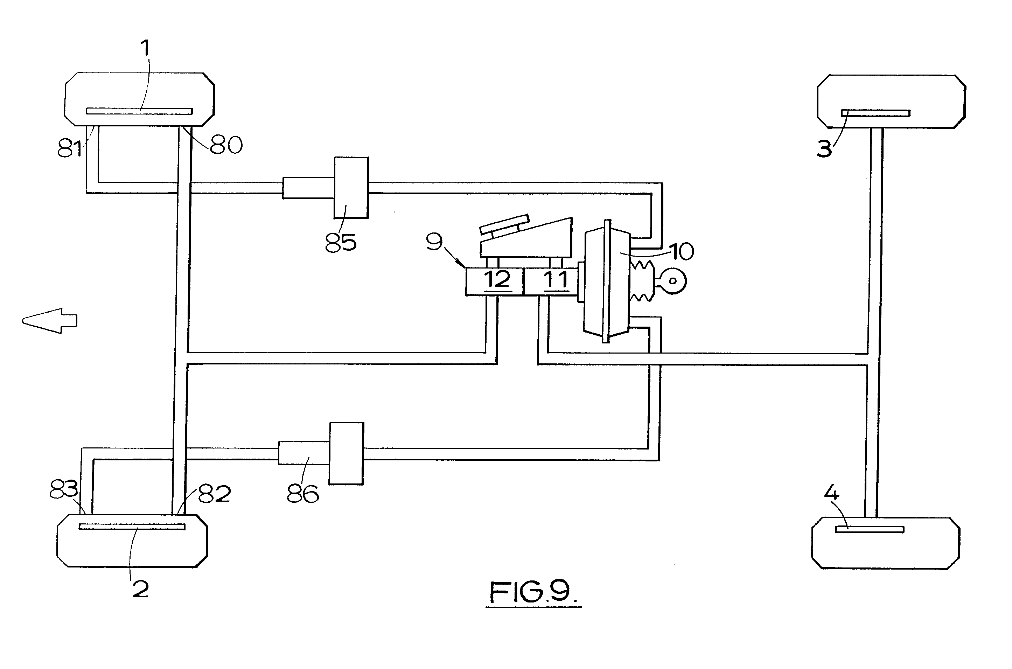

In the system illustrated in Figure 9 a separate simplified servo unit 85, 86, each similar to the unit 84, is arranged to actuate each respective actuator 81 and 83 separately and independently of each other.

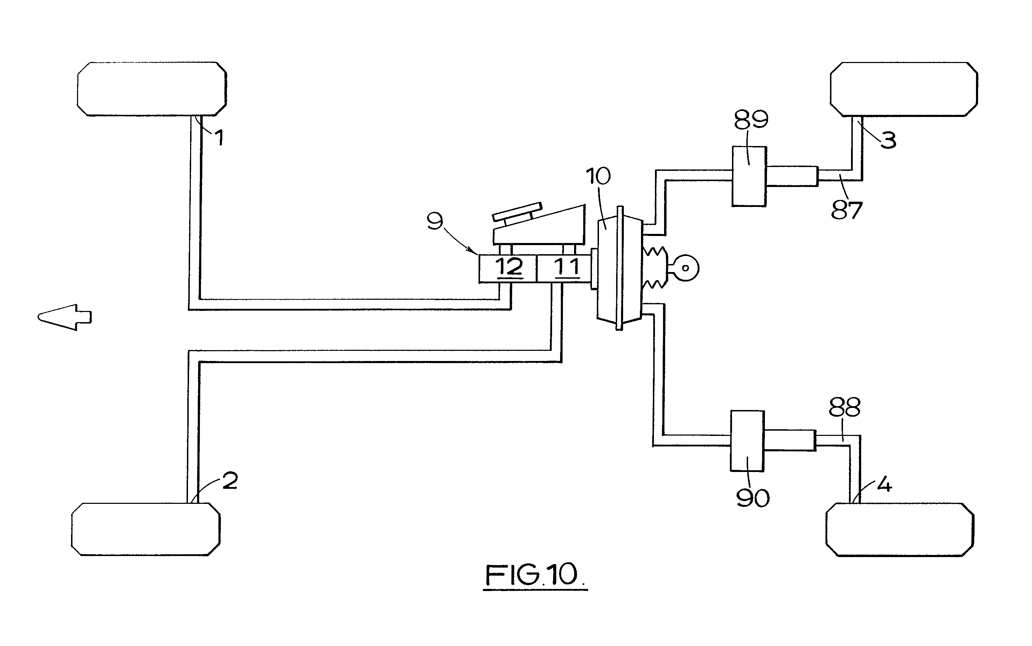

The system illustrated in Figure 10 is similar to the layout of Figure 6 except that the two rear wheel brakes 3 and 4 are operated independently by separate lines 87, 88 from the booster 10.

A servo unit 89, 90, similar to the units 84, 85 and 86, is installed in each respective line 87, 88.

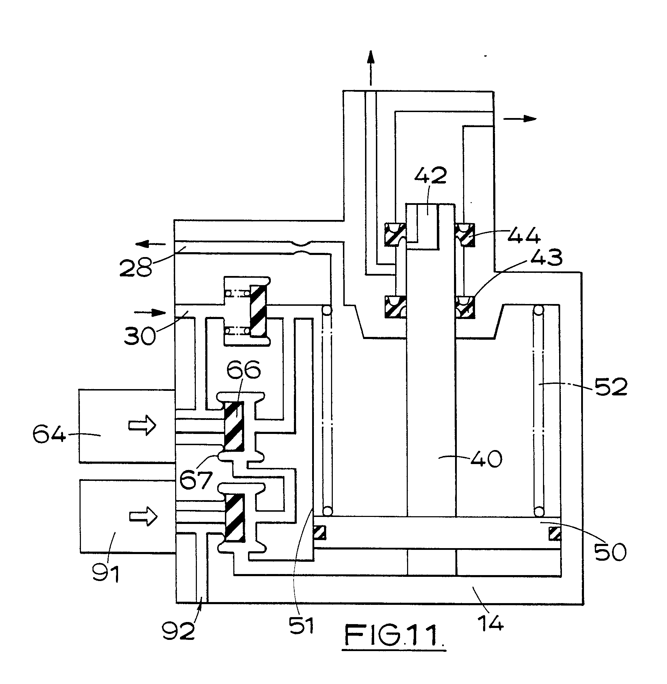

Figure 11 illustrates a modified servo unit similar to that illustrated in Figure 6 but incorporating a second solenoid-operated valve 91 which is disposed between the power chamber 30 of the booster 10 and a connection 92 to atmosphere.

Operation of the valve 91 isolates the line to the power chamber of the booster 10 and applies air to the underside of the piston 50 remote from the spring 52. This enables the unit to be used as a 'hill holder'. That is to say the vehicle is automatically braked when stopped on a hill by the operation of any suitable means, either manual or automatic.

The unit is otherwise the same as that of Figure 6 and corresponding reference numerals have been applied to corresponding parts.

When two units of the kind illustrated in Figure 11 are used to operate each half front, or each rear, such as in the layout of Figures 9 and 10, the units can be used for "wheel spin control". Thus if one of the driving wheels is spinning, the brake to that wheel may be automatically applied.

## Claims

1. A hydraulic braking system for vehicles comprising separate primary and secondary brake circuits, each incorporating a respective one of the pressure spaces (11, 12) of a tandem master cylinder (9) and arranged so that should one circuit fail, the other is still available to stop the vehicle, characterised in that the system is provided with a third brake circuit independent of the primary and secondary brake circuits.

2. A system as claimed in claim 1, characterised in that the master cylinder (9) is booster-assisted (10) and is arranged to operate only part of the braking system, the remaining part being operated by the power assistance of the booster (10) which constitutes a part of the third circuit.

3. A system as claimed in claim 1 or claim 2, characterised in that each of the front brakes (2, 1) is incorporated respectively in the primary and secondary brake circuits with the primary and secondary pressure spaces (11, 12), and both rear brakes (3, 4) are incorporated in the third circuit.

4. A system as claimed in claim 1 or claim 2, characterised in that each front brake (1, 2) is provided with a pair of actuators (80, 81; 82, 83) of which corresponding actuators (80, 82) of each pair are connected to one of the pressure spaces (12), the remaining actuators (81, 83) are incorporated in the third circuit, and the other pressure space (11) is connected to the rear brakes (3, 4).

5. An hydraulic braking system for a four wheel vehicle having a brake (1, 2, 3, 4) on each front and each rear wheel, comprising a tandem hydraulic master cylinder (9) having primary and secondary pressure spaces (11, 12), a booster (10) for operating the master cylinder, and at least one actuator for applying each brake, characterised in that each primary pressure space (11) and each secondary pressure space (12) is incorporated in a separate brake circuit with at least one respective actuator, and the remaining actuators are operated by hydraulic pressure generated in at least one auxiliary master cylinder (13) which is responsive to pressure generated in the booster.

6. A system is claimed in claim 5, characterised in that the auxiliary master cylinder (13) is adapted to be operated by a servo unit (15) responsive to pressure generated in the booster.

7. A system as claimed in claim 6, characterised in that the brakes (3, 4) on the rear wheels (7, 8) are applied by means of at least one servo unit (15; 89, 90), and the servo unit acts as a brake-pressure apportioning valve.

8. A system as claimed in any of claims 5-7, characterised in that the auxiliary master cylinder (13) incorporates a solenoid-operated valve (64) responsive to signals from at least one wheel speed sensor adapted to sense the rotational speed of the or each wheel applied by the respective actuator or actuators.

9. A system as claimed in claim 8, characterised in that brakes (3, 4) on both rear wheels are operated by a single common auxiliary master cylinder (13), and the solenoid-operated valve (84) is responsive to signals from sensors (60, 61) on both rear wheels.

10. A system as claimed in claim 8, characterised in that the brake (3, 4) on each rear wheel (7, 8) is operated by a respective one of two auxiliary master cylinders (89, 90), and the solenoid-operated valve in each auxiliary master cylinder is responsive to a signal from a speed sensor on the respective wheel.

11. A system as claimed in claim 8 or claim 9, characterised in that each front wheel is provided with a separate front wheel anti-lock modulator (72, 73; 76, 77) responsive to a signal from a speed sensor on the respective wheel.

12. A system as claimed in claim 11, characterised in that each front wheel modulator (72, 73) is driven from a respective front wheel (5, 6).

13. A system as claimed in claim 11, characterised in that each front wheel modulator (76, 77) is integrated into a full electronic anti-lock system with the rear wheel speed sensors.

14. A braking system as claimed in any of claims 4-13, characterised in that each primary and secondary pressure space (11, 12) of the tandem master cylinder (9) is incorporated into separate primary and secondary brake circuits with a respective front wheel brake (2, 1), and the brakes (3, 4) on the rear wheels (7, 8) are applied in response to pressure generated in the booster (10).

15. A braking system as claimed in any of claims 4-13, characterised in that each front wheel brake (1, 2) is operated by a pair of two separate first and second wheel cylinders (80, 81, 82, 83), one pressure space (12) is connected to both first wheel cylinders (80, 82) of each pair, the two second wheel cylinders (81, 83) are operated in response to pressure generated in the booster (10), and the other pressure space (11) is connected to the two rear wheel brakes.

REAR PRESSURE

FRONT PRESSURE

FIG.2.

10

9

12 11

5

1

6

2

7

3

8

4

30

28

24 21 20 32 54 26 33 35

34 42 47

22

31

29 55

23

27 25

13 44

41

40

43

52

36 51

15

53 14 50

FIG.1.

0 260 046

FIG.3.

0 260 046

FIG.4.

FIG.5.

0 260 046

FIG.7.

REAR PRESSURE

FRONT PRESSURE

FIG.6.

0 260 046

FIG.8.

0 260 046

FIG.9.

0 260 046

FIG.10.

FIG.11.